(19) Europäisches Patentamt
European Patent Office
Office européen des brevets

(11) Veröffentlichungsnummer: **0 304 671 B1**

(12) **EUROPÄISCHE PATENTSCHRIFT**

(45) Veröffentlichungstag der Patentschrift: **03.06.92**

(51) Int. Cl.[5]: **C08F 32/04**, C08F 4/64

(21) Anmeldenummer: **88112407.7**

(22) Anmeldetag: **30.07.88**

(54) **Verfahren zur Herstellung eines Olefinpolymers.**

(30) Priorität: **07.08.87 DE 3726325**

(43) Veröffentlichungstag der Anmeldung:
**01.03.89 Patentblatt 89/09**

(45) Bekanntmachung des Hinweises auf die Patenterteilung:
**03.06.92 Patentblatt 92/23**

(84) Benannte Vertragsstaaten:
**BE DE ES FR GB IT NL**

(56) Entgegenhaltungen:
**EP-A- 0 185 918**

**DIE ANGEWANDTE MAKROMOLEKULARE CHEMIE, Band 145/146, 1986, Seiten 149-160, Hüthig & Wepf Verlag, Basel, CH; W. KAMINSKY: "Stereoselekfive Polymerisation von Olefinen mit homogenen, chiralen Ziegler-Natta-Katalysatoren"**

**Polymer Handbook 2nd Ed. page III6, Ref. 259 + 147**

(73) Patentinhaber: **HOECHST AKTIENGESELLSCHAFT**
**Postfach 80 03 20**
**W-6230 Frankfurt am Main 80(DE)**

(72) Erfinder: **Kaminsky, Walter, Prof. Dr.**
**Buschweg 52**
**W-2080 Pinneberg(DE)**
Erfinder: **Spiehl, Regina**
**Sentastrasse 30**
**W-2000 Hamburg 76(DE)**

EP 0 304 671 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf ein Verfahren zur Herstellung von Homo- und Copolymeren von Cycloolefinen, wobei die Ringe der Cycloolefine nicht geöffnet werden.

Es ist bekannt, daß Cycloolefine mittels verschiedener Ziegler-Katalysatoren polymerisiert werden können. Dabei tritt jedoch in den meisten Fällen Ringöffnung ein. Außerdem werden keine hochisotaktlschen Polycycloolefine erhalten (Die Makromolekulare Chemie, 90 (1966) S. 26-37 und ibid. 91 (1966) S. 87-106). So bildet sich bei der Polymerisation von Cyclopenten unter Ringöffnung das sog. Polypentamere als Reaktionsprodukt (Angew. Chemie 76, 1964, S. 765-800). Gemäß La Chimica et l'Industria , Vol. 44, N. 11, 1962, S. 1212-1216, entsteht bei der Copolymerisation von Ethylen mit Cyclopenten ein kristallines Produkt, das zwar intakte Cyclopentenringe aufweist, jedoch durch eine alternierende Struktur ohne Cycloolefinsequenzen charakterisiert ist.

Weiterhin ist bekannt, daß beim Einsatz eines Katalysators auf Basis Bis-Cyclopentadienylverbindungen des Zirkons und Aluminoxan beim Polymerisieren von Propylen nur ataktisches Polymer erhalten wird (vgl. US-PS 45 42 199).

Schließlich kann mittels löslicher stereorigider chiraler Zirkonverbindungen hochisotaktisches Polypropylen hergestellt werden (vgl. EP-A 185 918).

Die Aufgabe bestand darin, ein Polymerisationsverfahren zu finden, bei welchem cyclische Olefine unter Ringerhalt und isotaktisch auch mit anderen linearen Olefinen polymerisiert werden können.

Es wurde gefunden, daß die Aufgabe gelöst werden kann, wenn als Katalysator eine stereorigide, chirale Metallocenverbindung zusammen mit einem Aluminoxan verwendet wird.

Somit betrifft die vorliegende Erfindung ein Verfahren zur Herstellung eines Olefinpolymers durch Polymerisation von 80 bis 100 Gew.-%, bezogen auf die Gesamtmenge der Monomeren, eines Cycloolefins der Formel

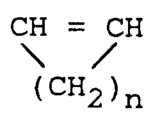

worin n eine Zahl von 2 bis 10 ist,
und 0 bis 20 Gew.-%, bezogen auf die Gesamtmenge der Monomeren, eines $C_2$- bis $C_{28}$-1-Olefins oder $C_4$- bis $C_{28}$-Diolefins, in Lösung, in Suspension oder in der Gasphase, bei einer Temperatur von -60 bis 150 °C, bei einem Druck von 0,5 bis 64 bar, in Gegenwart eines Katalysators, welcher aus einer Ubergangsmetallverbindung und einem Aluminoxan besteht, dadurch gekennzeichnet,
daß die Polymerisation in Gegenwart eines Katalysators durchgeführt wird, dessen Übergangsmetallverbindung eine stereorigide, chirale Metallocenverbindung der Formel I

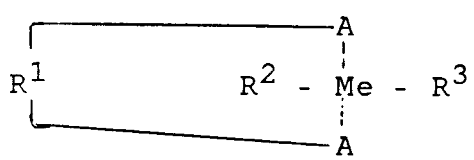 (I) ist,

worin

| | |
|---|---|
| Me | ein Übergangsmetall der Gruppen IVb bis VIb des Periodensystems der Elemente, |
| A | ein ein- oder ein mehrkerniger, unsymmetrischer Kohlenwasserstoffrest ist, |
| $R^1$ | einen $C_1$- bis $C_4$-Alkylenrest bedeutet und |
| $R^2$ und $R^3$ | gleich oder verschieden sind und ein Halogenatom oder einen $C_1$- bis $C_6$-Alkylrest bedeuten, und wobei das Aluminoxan ein solches der Formel II |

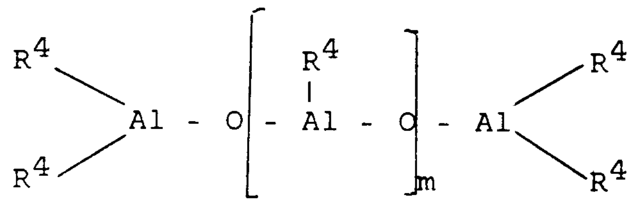

(II)

für den linearen Typ und/oder der Formel III

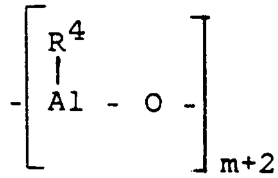

(III)

für den cyclischen Typ ist, wobei in den Formeln II und III $R^4$ eine $C_1$-$C_6$-Alkylgruppe bedeutet und m eine ganze Zahl von 2 bis 40 ist,

sowie das nach diesem Verfahren hergestellte Polymer.

In der Formel I

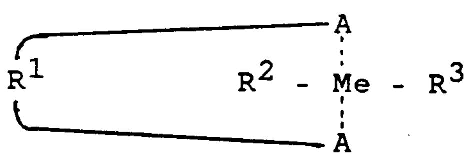

(I)

der Metallocenverbindung ist Me ein Übergangsmetall der Gruppen IVb, Vb oder VIb des Periodensystems der Elemente, beispielsweise Titan, Zirkonium, Hafnium, Vanadium, Tantal, Chrom, Molybdän, Wolfram. Bevorzugt werden Titan und Zirkonium, insbesondere Zirkonium.

A ist ein ein- oder mehrkerniger, unsymmetrischer Kohlenwasserstoffrest, beispielsweise ein Indenyl- oder ein unsubstituierter oder substituierter Cyclopentadienligand oder ein Benzolligand oder ein Cyclooctatetraenligand, vorzugsweise ein Indenyl- oder ein substituierte Cyclopentadienligand.

$R^1$ ist ein $C_1$- bis $C_4$-, vorzugsweise ein $C_2$-Alkylenrest.

$R^2$ und $R^3$ sind gleich oder verschieden und bedeuten ein Halogenatom oder einen $C_1$- bis $C_6$-Alkylrest, vorzugsweise ein Chloratom.

Besonders bevorzugt sind das Racemat, aber auch die R- oder S-Formen des Ethylenbis(indenyl)-zirkoniumdichlorids oder des Ethylen-bis(4,5,6,7-tetrahydro-1-indenyl)zirkondichlorids.

Die zweite Komponente des erfindungsgemäßen Katalysators ist ein Aluminoxan der Formel II

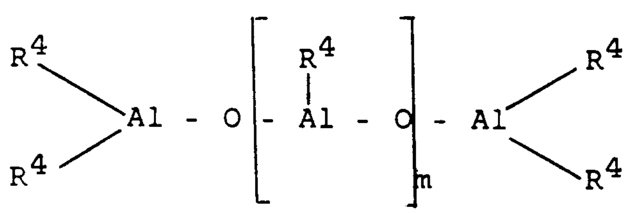

(II)

für den linearen Typ und/oder der Formel III

$$-\left[\begin{matrix}R^4 & \\ Al - O & \end{matrix}\right]_{m+2}- \qquad (III)$$

für den cyclischen Typ. In diesen Formeln bedeuten $R^4$ eine $C_1$-$C_6$-Alkylgruppe vorzugsweise Methyl, Ethyl oder Isobutyl, insbesondere Methyl, und m eine ganze Zahl von 2 bis 40, bevorzugt 10 bis 20.

Das Aluminoxan kann auf verschiedene Art und Weise hergestellt werden.

Bei einem der Verfahren wird fein gepulvertes Kupfersulfat-pentahydrat in Toluol aufgeschlämmt und in einem Glaskolben unter Inertgas bei etwa -20 °C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30 °C ansteigt. Anschließend wird das im Toluol gelöste Aluminoxan von dem Kupfersulfat abfiltriert und das Toluol unter Vakuum abdestilliert.

Weiterhin erhält man Aluminoxane, wenn man bei einer Temperatur von -20 bis 100 °C in einem inerten aliphatischen oder aromatischen Lösemittel, vorzugsweise Heptan oder Toluol, gelöstes Aluminiumtrialkyl, vorzugsweise Aluminiumtrialkyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1:1 bis 50:1 - vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 18H_2O$ und $Al_2(SO_4)_3 \cdot 16H_6O$ mit dem besonders hohen Kristallwassergehalt von 16 bzw. 18 mol $H_2O$/mol $Al_2(SO_4)_3$

Der erfindungsgemäß zu verwendende Katalysator wird zur Homo- und Copolymerisation von Cycloolefinen der Formel

$$\begin{matrix} CH = CH \\ \backslash \quad / \\ (CH_2)_n \end{matrix}$$

worin n eine Zahl von 2 bis 10, vorzugsweise 3, 5, 6, insbesondere 3 ist, eingesetzt. Beispiele sind Cyclobuten, Cyclopenten, Cyclohexen, Cyclohepten, Cycloocten, vorzugsweise Cyclopenten, Cyclohepten, Cycloocten, insbesondere Cyclopenten. Die genannten Cycloolefine können allein oder im Gemisch oder alternierend polymerisiert werden.

Als Comonomere werden eingesetzt $C_2$- bis $C_{28}$-, vorzugsweise $C_2$- bis $C_{10}$-, insbesondere $C_2$- bis $C_6$-1-olefine oder $C_4$-bis $C_{28}$-, vorzugsweise $C_4$- bis $C_{12}$-Diolefine. Beispiele sind Ethylen, Propylen, Buten-(1), Hexen-(1), 4-Methylpenten-(1), Octen-(1), Butadien-(1,4), Norbornadien. Bevorzugt sind Ethylen, Propylen, Buten-(1), Hexen-(1), Octen-(1), insbesondere Ethylen und Propylen als 1-Olefine und Butadien als Diolefin.

Von dem Cycloolefin werden 80 bis 100, vorzugsweise 90 bis 100 Mol-%, bezogen auf die Gesamtmenge der Monomeren, und von den linearen Comonomeren 0 bis 20, vorzugsweise 0 bis 10 Mol-%, bezogen auf die Gesamtmenge der Monomeren, eingesetzt.

Die Polymerisation wird in einem für das Ziegler-Niederdruckverfahren gebräuchlichen inerten Lösemittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Brauchbar ist auch Toluol. Schließlich kann auch das zu polymerisierende Monomere als Lösemittel oder Suspensionsmittel eingesetzt werden. Die Molmasse des Polymerisats kann in bekannter Weise geregelt werden; vorzugsweise wird dazu Wasserstoff verwendet.

Die Polymerisation wird in bekannter Weise in Suspension oder in der Gasphase, kontinuierlich oder diskontinuierlich, ein- oder mehrstufig bei einer Temperatur von -60 bis 150 °C, vorzugsweise -20 bis 80 °C, durchgeführt. Der Druck beträgt 0,5 bis 64 bar. Bevorzugt ist die Polymerisation in dem technisch

besonders interessanten Druckbereich von 5 bis 64 bar.

Dabei wird die Metallocenverbindung in einer Konzentration, bezogen auf das Übergangsmetall, von $10^{-3}$ bis $10^{-7}$, vorzugsweise $10^{-4}$ bis $10^{-6}$ mol Übergangsmetall pro $dm^3$ Lösemittel bzw. pro $dm^3$ Reaktorvolumen angewendet. Das Aluminoxan wird in einer Konzentration von $10^{-4}$ bis $10^{-1}$, vorzugsweise $10^{-3}$ bis $2 \cdot 10^{-2}$ mol pro $dm^3$ Lösemittel bzw. pro $dm^3$ Reaktorvolumen verwendet, bezogen auf den Gehalt an Aluminium. Prinzipiell sind aber auch höhere Konzentrationen möglich.

Gegenüber dem bekannten Stand der Technik zeichnet sich das erfindungsgemäße Verfahren dadurch aus, daß die bevorzugt verwendeten Zirkonverbindungen in verdünnter Lösung sehr temperaturstabil sind, so daß sie auch bei Temperaturen bis 80 °C eingesetzt werden können.

Bei der Herstellung von Copolymerisaten kann die Variation der Molverhältnisse des Cycloolefins zum eingesetzten 1-Olefin in einem weiten Bereich erfolgen. Durch die Wahl der Polymerisationstemperatur, die Konzentration der Katalysatorkomponenten und das eingesetzte Molverhältnis läßt sich die Einbaurate am Comonomer nahezu beliebig steuern. Eine Erniedrigung der Polymerisationstemperatur ist mit einer Erhöhung der Einbaurate an Cycloolefinen verbunden.

Die mittlere Molmasse des gebildeten Copolymers läßt sich durch Variation der Katalysatorkonzentration oder der Temperatur in bekannter Weise variieren. Besonders bemerkenswert ist eine fast vollständige Unabhängigkeit der Molmasse vom vorgelegten Monomerverhältnis.

Die Polydispersität $M_w/M_n$ der Copolymeren ist mit Werten zwischen 2,9 - 6,0 (4,5) recht eng, unterscheidet sich aber von den Molmassenverteilungen der mit diesem Katalysatorsystem hergestellten Polyethylene und Polypropylene $M_w/M_n = 2$ deutlich. Dadurch resultiert ein Eigenschaftbild der Polymerisate, das diese für das Spritzgießen besonders geeignet macht.

Durch das erfindungsgemäße Verfahren lassen sich erstmals hochisotaktische Homopolymerisate herstellen, bei denen die Ringe der Monomeren vollständig erhalten bleiben und aufgrund von Festkörper-IR- und NMR-spektroskopischen sowie röntgenographischen Analysen auf folgende Struktur geschlossen werden kann:

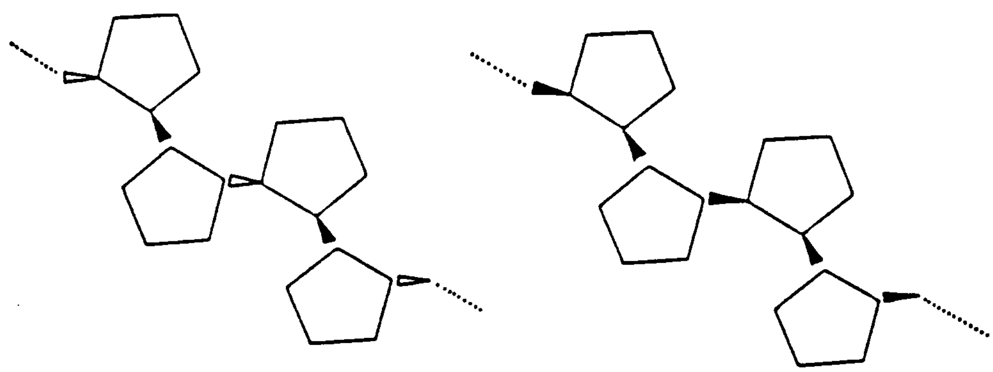

Erstaunlicherweise zeichnen sich diese Homopolymerisate durch einen für Polyolefine überraschend hohen Schmelzpunkt oberhalb der Zersetzungstemperatur von über 250 °C aus. Im Gegensatz zu den mit bekannten Katalysatoren hergestellten amorphen Polypentenameren zeichnet sich insbesondere das isotaktische Polycyclopenten durch ungewöhnlich scharfe Röntgenbeugungslinien und damit eine hohe Kristallinität aus. Das Polymere besitzt hohe Resistenz gegenüber allen üblichen Lösemitteln.

Im folgenden wird die Erfindung anhand von Beispielen näher erläutert:

**Beispiel 1**

Herstellung von Methylaluminoxan

44,3 g $Al_2(SO_4)_3 \cdot H_2O$ (0,056 mol, entsprechend 1 mol $H_2O$) wurden in 250 $cm^3$ Toluol suspendiert, mit 50 $cm^3$ Trimethylaluminium (0.52 mol) versetzt und bei 20 °C zur Reaktion gebracht. Nach 30 Stunden Reaktionszeit waren ca. 0,9 mol Methan entwickelt worden. Anschließend wurde die Lösung vom festen Aluminiumsulfat abfiltriert. Durch Abziehen des Toluols wurden 19,7 g Methylaluminoxan erhalten. Die Ausbeute betrug 63 % der Theorie. Die kryoskopisch in Benzol bestimmte mittlere Molmasse lag bei 1170. Der mittlere Oligomerisationsgrad betrug ca. 16.

**Beispiel 2**

Herstellung von Ethylen-bis(indenyl)zirkoniumdichlorid

Die Herstellung erfolgte analog wie in Journal of Organometallic Chemistry, 232 (1982) 233-247 beschrieben.

**Beispiel 3**

In einem 250 $cm^3$ Rundkolben mit Argonansatz wurden im Argongegenstrom 100 $cm^3$ Cyclopenten, 200 mg Aluminoxan und 5 $cm^3$ einer rac-Ethylen-(bisindenyl)-zirkondichloridlösung gegeben. Die Zirkonkonzentration betrug $10^{-4}$ mol/$dm^3$. Der Kolben wurde bei 30 °C in einem Wasserbadthermostat gehalten, wobei nach einer Reaktionszeit von 90 h 13,6 g eines sehr feinverteilten weißen Pulvers erhalten wurden. Debye-Scherrer-Aufnahmen zeigten eine hohe Kristallinität der Probe. Die Viskositätszahl wurde zu 30 $cm^3$/g bestimmt. DSC-Messungen zeigten, daß das Produkt unterhalb der Zersetzungstemperatur nicht zu schmelzen war, aber eine irreversible Umwandlung ab 130 °C eintrat. Die Dichte des Homopolymers lag bei 1,104 g/$cm^3$ (bei 23 °C in der Gradientensäule). Aus CP-MAS-festkörper-NMR-Spektren ließ sich entnehmen, daß sowohl cis- als auch trans-Verknüpfungen der Cyclopenteneinheiten vorlagen.

**Beispiel 4**

Es wurde analog Beispiel 3 gearbeitet, jedoch wurden in Abanderung 50 $cm^3$ Cyclohepten und eine Zirkonocenkonzentration von $2.10^{-4}$ mol/$dm^3$ verwendet. Nach 19 Stunden Reaktionszeit erhielt man 8,9 g eines sehr feinen weißen Pulvers. Das erhaltene Polycyclohepten glich weitgehend in seinen Eigenschaften dem im Beispiel 3 beschriebenen Polycyclopenten.

**Beispiel 5**

Ein im Vakuum ausgeheizter, mehrfach gespülter und mittels Thermostaten auf -30 °C gehaltener 1-Liter-Glasautoklav wurde im Argongegenstrom mit 150 $cm^3$ Toluol, 100 $cm^3$ Cyclopenten und 300 mg Aluminoxan befüllt. Das Ethylen wurde mit einem Druck von 2 bar aufgepreßt und die Sättigung abgewartet. Das Molverhältnis Ethylen zu Cyclopenten betrug 1:15,3 Die Zugabe von 1 $cm^3$ des in Toluol gelösten rac-Ethylen(bisindenyl)zirkondichlorids erfolgte dann über eine Druckschleuse, so daß die Konzentration der Reaktionslösung $7,4 \cdot 10^{-7}$ mol/$dm^3$ Zr betrug. Die Polymerisation setzte sofort unter Trübung des Reaktionsansatzes ein. Nach einer Reaktionsdauer von 45 min wurde der Überdruck abgelassen und der Ansatz mit Ethanol gequencht. Katalysatorreste wurden durch Rühren mit HCl-Lösung entfernt, das Polymere abgesaugt, gewaschen und anschließend bis zur Gewichtskonstanz bei 60 °C getrocknet.

Die Ausbeute an weißem, pulvrigen Ethylen-Cyclopenten-Copolymer betrug 11,4 g, was einer Aktivität von 19200 g Copolymerisat /mol Zr x s entspricht. Die viskosimetrisch ermittelte Molmasse $M_w$ lag bei 104000 g/mol und die GPC-Messung ergab einen $M_w/M_n$ Wert von 3,5. Die mittels $^{13}C$-NMR-Spektroskopie ermittelte Einbaurate an Cycloolefin ergab einen Wert von 4 Mol % Cyclopenten im Copolymer. Schmelzpunkt 106,5 °C.

**Beispiel 6**

Die Polymerisation wurde analog zum Beispiel 5 durchgeführt, wobei abweichend bei einer Temperatur von -10 °C, einer Zr-Konzentration von $6,4 \cdot 10^{-6}$ mol/$dm^3$ Zr und einem Druck von 1,25 bar Ethylen, um das vorgelegte Molverhältnis konstant zu halten, gearbeitet wurde. Nach einer Reaktionszeit von 150 min wurden 3,5 g Copolymer erhalten; Mn 223000 g/mol; Einbaurate an Cyclopenten im Copolymer 6,1 %; Smp. 88,1 °C; $M_w/M_n$ = 3,7.

**Beispiel 7**

Die Polymerisation wurde analog dem Beispiel 5 durchgeführt, jedoch bei einer Zirkonkonzentration von $4,0 \cdot 10^{-6}$ mol/$dm^3$und einem Molverhältnis Ethylen zu Cyclopenten von 1:11,7. Nach einer Reaktionszeit von 45 min bei einer Aktivität von 14100 g Copolymer/mol Zr•s wurden 24,5 g eines im feuchten Zustand gequollenen, tropfenden Produktes und im trockenen Zustand weißen, elastischen Polymeren mit 18 Mo % Cyclopenten erhalten. Das $^{13}C$-NMR-Spektrum wies neben Signalen für statistisch verteiltes Comonomer

auch Signale für Cyclopentensequenzen im Copolymer auf. Das Verhältnis betrug etwa 70:30 Mol %. Die Molmasse hatte einen Wert von 20000, die Molmassenverteilung lag bei $M_w/M_n$ = 3,5.

**Beispiel 8**

Es wurde analog Beispiel 5 gearbeitet. Es wurde jedoch bei einer Zirkonkonzentration von $1{,}5 \cdot 10^{-5}$ $mol/dm^3$ und einem Molverhältnis Ethylen zu Cyclopenten von 1:10,8 gearbeitet. Die Ausbeute betrug 27,0 g bei einer Aktivität von 1750 g Copolymer/mol Zr•s. Die Molmasse hatte einen Wert von 20000, Einbaurate 28 Mol %, und die Molmassenverteilung lag bei $M_w/M_n$ = 3,6.

**Beispiel 9**

Die Polymerisation wurde analog wie in Beispiel 5 durchgeführt. Als Cycloolefin wurde jedoch Cyclohepten verwendet, wobei die Katalysatorkonzentration auf $7{,}4 \cdot 10^{-6}$ $mol/dm^3$ Zr erhöht wurde, um eine Aktivität von 2160 g Copolymer/mol Zr•s zu erhalten. Die Ausbeute betrug 8,7 g nach einer Polymerisationszeit von 45 min. Die Einbaurate an Cyclohepten war mit 3,0 mol % geringer als beim Cyclopenten in Beispiel 3. Die Molmasse wurde zu 21000 bestimmt.

**Beispiel 10**

Die Polymerisation wurde analog dem Beispiel 5 durchgeführt. Als Cycloolefin wurde in Abänderung Cycloocten eingesetzt. Bei einer Katalysatorkonzentration von $3{,}7 \cdot 10^{-5}$ $mol/dm^3$ Zr wurde mit einer Aktivität von 1500 g Copolymer/mol Zr•s eine Ausbeute von 14,7 g erzielt. Die Einbaurate betrug 1,2 mol %, die mittlere Molmasse betrug 2000. Der Schmelzpunkt des Copolymerisats sank auf 118,2 °C ab.

**Patentansprüche**

1. Verfahren zur Herstellung eines Olefinpolymers durch Polymerisation von
80 bis 100 Gew.-%, bezogen auf die Gesamtmenge der Monomeren, eines Cycloolefins der Formel

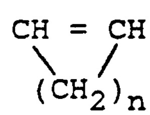

worin n eine Zahl von 2 bis 10 ist, und
0 bis 20 Gew.-%, bezogen auf die Gesamtmenge der Monomeren, eines $C_2$- bis $C_{28}$-1-Olefins oder $C_4$-bis $C_{28}$-Diolefins, in Lösung, in Suspension oder in der Gasphase, bei einer Temperatur von -60 bis 150 °C, bei einem Druck von 0,5 bis 64 bar, in Gegenwart eines Katalysators, welcher aus einer Übergangsmetallverbindung und einem Aluminoxan besteht, dadurch gekennzeichnet, daß die Polymerisation in Gegenwart eines Katalysators durchgeführt wird, dessen Übergangsmetallverbindung eine stereorigide, chirale Metallocenverbindung der Formel I

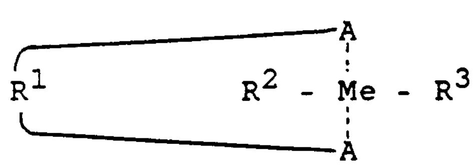

(I) ist,

worin

| | |
|---|---|
| Me | ein Übergangsmetall der Gruppen IVb bis VIb des Periodensystems der Elemente ist, |
| A | ein einkerniqer oder ein mehrkerniger, unsymmetrischer Kohlenwasserstoffrest ist, |
| $R^1$ | einen $C_1$- bis $C_4$-Alkylenrest bedeutet und |
| $R^2$ und $R^3$ | gleich oder verschieden sind und ein Halogenatom oder einen $C_1$- bis $C_6$-Alkylrest |

bedeuten, und wobei das Aluminoxan ein solches der Formel II

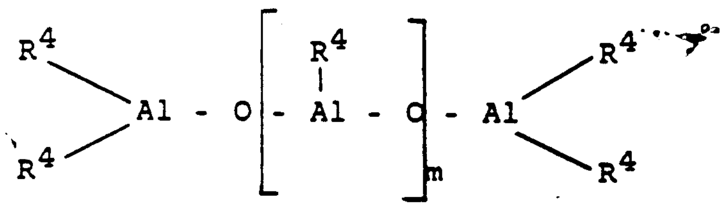

(II)

für den linearen Typ und/oder der Formel III

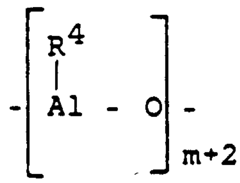

(III)

für den cyclischen Typ ist, wobei in den Formeln II und III $R^4$ eine $C_1$-$C_6$-Alkylgruppe bedeutet und m eine ganze Zahl von 2 bis 40 ist.

**2.** Verfahren nach Anspruch 1, dadurch gekennzeichnet, daß als Cycloolefin Cyclopenten und/oder Cyclohepten verwendet werden.

**3.** Verfahren nach Anspruch 1, dadurch gekennzeichnet, daß als Comonomeres ein 1-Olefin mit 2 bis 10 C-Atomen verwendet wird.

**4.** Verfahren nach Anspruch 1, dadurch gekennzeichnet, daß die Metallocenverbindung eine Verbindung des Zirkons ist.

**5.** Verfahren nach Anspruch 1, dadurch gekennzeichnet, daß die Metallocenverbindung Ethylen-(bisindenyl)zirkoniumdichlorid ist.

**6.** Verfahren nach Anspurch 1, dadurch gekennzeichnet, daß die Polymerisationstemperatur im Bereich von -20 °C bis 80 °C liegt.

**7.** Kristallines isotaktisches Polycyclopentenhomopolymerisat, bestehend aus sich wiederholenden Cyclopenteneinheiten.

**8.** 1-Olefincopolymer, erhältich durch das Verfahren nach Anspruch 1.

## Claims

**1.** A process for the preparation of an olefin polymer by means of polymerization of 80 to 100% by weight, relative to the total amount of the monomers, of a cycloolefin of the formula

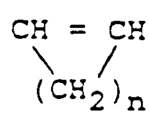

in which n is a number from 2 to 10,
and 0 to 20% by weight, relative to the total amount of the monomers, of a $C_2$- to $C_{28}$-l-olefin or $C_4$- to

$C_{28}$-diolefin, in solution, in suspension or in the gas phase, at a temperature from -60 to 150 °C, at a pressure from 0.5 to 64 bar, in the presence of a catalyst which comprises a transition metal compound and an aluminoxane, which comprises carrying out the polymerization in the presence of a catalyst the transition metal compound of which is a stereorigid chiral metallocene compound of the formula I

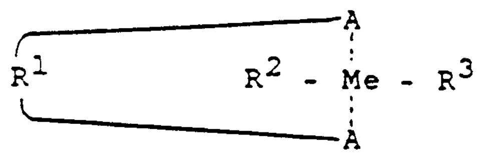

(I)

in which

| | |
|---|---|
| Me | is a transition metal of groups IVb to VIb of the Periodic Table of the Elements, |
| A | is a mononuclear or a polynuclear, asymmetrical hydrocarbon radical, |
| $R^1$ | denotes a $C_1$- to $C_4$-alkylene radical and |
| $R^2$ and $R^3$ | are identical or different and denote a halogen atom or a $C_1$- to $C_6$-alkyl radical, and where the aluminoxane has the formula II |

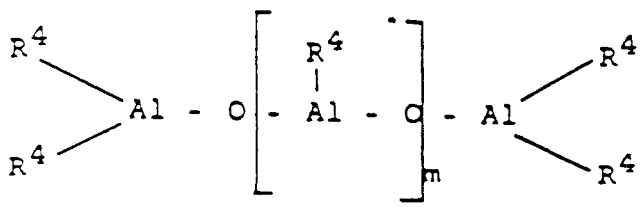

(II)

for the linear type and/or has the formula III

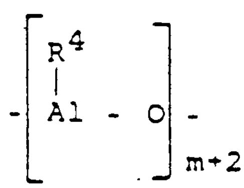

(III)

for the cyclic type, and, in the formulae II and III, $R^4$ denotes a $C_1$-$C_6$-alkyl group and m is an integer from 2 to 40.

**2.** The process as claimed in claim 1, wherein the cycloolefin used is cyclopentene and/or cycloheptene.

**3.** The process as claimed in claim 1, wherein the comonomer used is a l-olefin having 2 to 10 carbon atoms.

**4.** The process as claimed in claim 1, wherein the metallocene compound is a compound of zirconium.

**5.** The process as claimed in claim 1, wherein the metallocene compound is ethylene(bisindenyl)-zirconium dichloride.

**6.** The process as claimed in claim 1, wherein the polymerization temperature is in the range from -20 °C to 80 °C.

**7.** A crystalline isotactic polycyclopentene homopolymer, comprising repeating cyclopentene units.

**8.** A 1-olefin copolymer obtainable by the process as claimed in claim 1.

**Revendications**

**1.** Procédé pour préparer un polymère d'oléfines par polymérisation de 80 à 100% en poids, par rapport à la quantité totale des monomères, d'une cyclo-oléfine répondant à la formule :

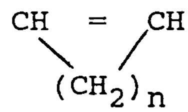

dans laquelle n désigne un nombre de 2 à 10, et de 0 à 20% en poids, par rapport à la quantité totale des monomères, d'une u-oléfine en $C_2$-$C_{28}$ ou d'une dioléfine en $C_4$-$C_{28}$, en solution, en suspension ou en phase gazeuse, à une température de -60 à 150 °C, sous une pression de 0,5 à 64 bar, en présence d'un catalyseur constitué d'un composé d'un métal de transition et d'un aluminoxane, procédé caractérisé en ce qu'on effectue la polymérisation en présence d'un catalyseur dont le composé de métal de transition est un métallocène chiral stéréorigide répondant à la formule I :

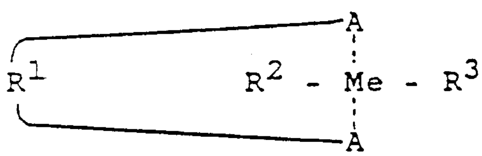

(I)

dans laquelle

| | |
|---|---|
| Me | représente un métal de transition d'un des groupes IVb à VIb de la classification périodique des éléments, |
| A | représente un radical hydrocarboné dissymétrique à un ou à plusieurs noyaux, |
| $R^1$ | représente un radical alkylène en $C_1$-$C_4$, et |
| $R^2$ et $R^3$ | représentent chacun, indépendamment l'un de l'autre, un atome d'halogène ou un radical alkyle en $C_1$-$C_6$, |

et dont l'aluminoxane, lorsqu'il est du type linéaire, répond à la formule II :

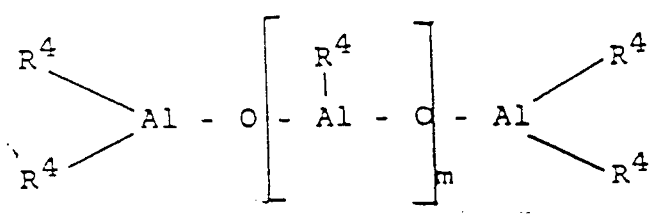

(II)

et, lorsqu'il est du type cyclique, répond à la formule III :

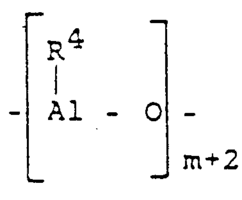

(III)

formules dans lesquelles $R^4$ représente un radical alkyle en $C_1$-$C_6$ et m un nombre entier de 2 à 40.

2. Procédé selon la revendication 1 caractérisé en ce qu'on utilise, comme cyclo-oléfine, le cyclopentène et/ou le cycloheptène.

3. Procédé selon la revendication 1 caractérisé en ce qu'on utilise, comme comonomère, une α-oléfine contenant de 2 à 10 atomes de carbone.

4. Procédé selon la revendication 1 caractérisé en ce que le métallocène est un composé du zirconium.

5. Procédé selon la revendication 1 caractérisé en ce que le métallocène est le dichlorure d'éthylène-bis-(indényl)-zirconium.

6. Procédé selon la revendication 1 caractérisé en ce la température de polymérisation est comprise entre -20 ° C et 80 ° C.

7. Polycyclopentène homopolymère isotactique cristallisé qui est constitué de motifs de cyclopentène répétés.

8. Copolymère avec une α-oléfine qui peut être obtenu par le procédé selon la revendication 1.